# EUROPÄISCHE PATENTSCHRIFT

(11) **EP 2 271 878 B1**
(45) Veröffentlichungstag und Bekanntmachung des Hinweises auf die Patenterteilung: **30.08.2017**
(21) Anmeldenummer: 08861626.3
(22) Anmeldetag: 08.12.2008
(51) Int. Cl.: F24H 1/38, F24H 8/00

(54) **WÄRMETAUSCHER FÜR EIN HEIZGERÄT**
HEAT EXCHANGER FOR A HEATING APPLIANCE
ÉCHANGEUR DE CHALEUR POUR APPAREIL DE CHAUFFAGE

(30) Priorität: 15.12.2007 DE 102007060508
(43) Veröffentlichungstag der Anmeldung: 12.01.2011
(73) Patentinhaber: Robert Bosch GmbH, 70442 Stuttgart (DE)
(72) Erfinder: FEBERWEE, Gert-Jan, 7425 HL Deventer (NL); BARENDREGT, Evert, 7215 SB Joppe (NL); SCHOENMAKER, Bart Cornelis, 8084 AR't Harde (NL)
(86) Internationale Anmeldenummer: PCT/EP2008/067019
(87) Internationale Veröffentlichungsnummer: WO 2009/077373

(56) Entgegenhaltungen:
- EP-A2- 1 136 764
- DE-A1- 3 807 194
- JP-A- 59 049 447

## Beschreibung

Die Erfindung betrifft einen Wärmetauscher für ein Heizgerät nach dem Oberbegriff des Patentanspruches 1.

Gattungsgemäße Wärmetauscher bestehen aus mindestens zwei einstückig gegossenen Gliedern, welche einen Feuerraum mit einem Brenneranschluss im oberen Bereich sowie mindestens einen vom Feuerraum zu einem Abgassammler im unteren Bereich führenden Heizgaszug mit Wärmetauscherflächen ausbilden. Diese sind mit angegossenen Vorsprüngen, meistens Rippen oder Noppen, als Oberflächen-Vergrößerung zur Verbesserung der Wärmeübertragung versehen. In der Regel stehen die Glieder vertikal nebeneinander. Sogenannte Endglieder mit Wärmetauscherflächen auf nur einer Seite bilden die äußeren Begrenzungen und können zum Erhöhen der Wärmeübertragungsleistung mit Mittelgliedern ergänzt werden. Diese weisen Wärmetauscherflächen auf beiden Seiten auf.

Wasserseitig sind alle Glieder bisher bei allen Ausführungsformen mindestens über zwei Naben miteinander verbunden und heizgasseitig erfolgt die Abdichtung zwischen zwei Kesselgliedern mit umlaufenden Dichtleisten, die wahlweise mit einer elastischen Dichtmasse gefüllt werden können.

Bekannt sind dazu auch ungekühlte Reinigungsdeckel zum Verschluss von Heizgas führenden Kanälen auf der Stirnseite oder auch gekühlte Teile, wie zum Beispiel mit Heizmedium durchströmte Feuerraumtüren. Wichtig für dauerhaltbare Abdichtungen ist das Einhalten vor bestimmten Vorgabewerten für die Temperaturbelastungen im Dichtbereich.

Neben dem Werkstoff Gusseisen für derartige Wärmetauscher sind weiterhin Brennwertheizkessel mit einem Gebläsebrenner für fossile Brennstoffe und einem Wärmetauscher aus Aluminium-Gusswerkstoffen bekannt. Diese können mit Sandguss-, Spritz-/

Druckguss- oder Verlorenen-Formen-Gussverfahren hergestellt werden. Technisch sind die Verfahren unterschiedlich aufwändig, jeweils für gewisse Stückzahlen besonders geeignet und haben in der Gestaltung der Teile auch deutliche Grenzen.

Hinsichtlich der heizmediumseitigen Strömungsführung unterscheidet man zwischen zwangsdurchströmten und nicht zwangsdurchströmten Wärmetauschern. Bei zwangsdurchströmten Wärmetauschern sorgt eine Umwälzpumpe für einen vorgegebenen Wasservolumenstrom durch die zumeist engen, mäanderförmig angelegten Wasserkanäle. Dazu sind insbesondere einstückig gegossene Wärmetauscherblocks mit ringsum um Feuerraum und Heizgaszug verlaufenden Wasserkanälen bekannt. Auf diese Weise sind trotz geringen Wasserinhaltes recht hohe, heizgasseitig eingetragene Wärmestromdichten realisierbar.
Bei der konstruktiven Auslegung eines solchen Wärmetauschers müssen die Wärmeleistung des Wärmeerzeugers sowie die heizgasseitigen und wasserseitigen Wärmetauscherflächen in einem bestimmten Verhältnis zueinander stehen. Einerseits muss der Wärmestrom der Heizgase bis herab zu einer Auslegungstemperatur auf den Wärmetauscher übertragen werden, andererseits muss der Wärmetauscher denselben Wärmestrom an das umgebende Heizwasser abgeben können. Sind diese beiden Größen nicht aufeinander abgestimmt, so kann das dazu führen, dass entweder die Abgassolltemperatur nicht erreicht wird - was sich in erhöhten Abgasverlusten bemerkbar macht -, oder dass die Übertemperatur des Wärmetauschers gegenüber dem umgebenden Heizwasser zu lokalem Sieden führt. Unerwünschte Siedegeräusche, Materialschädigungen und/oder Ablagerungen sind dann die Folge. Auch ist es zum Beispiel aus der EP 0 287 142 A2 bekannt, den Kanalquerschnitt für das Heizmedium in der gesamten oberen, heißesten und feuerraumnahen Zone eines Wärmetauscherblocks enger als im unteren, kühleren Bereich am Rücklaufwassereintritt zu gestalten. Damit soll im gesamten oberen, heißen Bereich eine hohe Strömungsgeschwindigkeit im Heizmedium führenden Kanal erzielt werden. Da die Kanaleinengung allmählich über den gesamten Kanalverlauf zunimmt, steigert sich dementsprechend auch die Kühlleistung.
Mit der DE 3807194 A1 ist ein Wärmetauscher bekannt geworden, der aus einzelnen gleich ausgebildeten, plattenförmigen, stranggepressten Metallelementen besteht, wobei jede Platte ein einzelner stranggepresster Körper ist und die einzelnen Elemente aneinander gelegt sind, so, dass bei Verwendung für einen Wasserheizer die Rauchgaskanäle durch Platten gebildet sind, deren Kanäle senkrecht verlaufen, während die Wasserkanäle durch Platten verlaufen, deren Kanäle waagrecht angeordnet sind.

Der Erfindung liegt die Aufgabe zu Grunde, einen kompakten, leichten und insbesondere für den Brennwertbetrieb geeigneten Wärmetauscher für ein Heizgerät zu schaffen.

Erfindungsgemäß wird dies gelöst durch einen Wärmetauscher für ein Heizgerät, insbesondere ein Brennwertheizgerät, bestehend aus mindestens zwei vertikal ausgerichteten Gliedern und jeweils einem Deckel an der Stirnseite, welche einen Feuerraum ausbilden, und mit wahlweise mindestens einem Mittelglied zwischen den beiden begrenzende äußeren Gliedern, sowie mit mehreren parallel und/oder in Reihe durchströmten, Heizmedium führenden Kanälen in den Gliedern und/oder Deckeln, wobei Glieder und Deckel an der Stirnseite miteinander zu einem heizgasdichten Block verbundenen sind, dessen Heizmedium führende Kanäle miteinander korrespondieren, dadurch gekennzeichnet, dass die Deckel mindestens einen vom Feuerraum im oberen Bereich zu einem Abgassammler im unteren Bereich abwärts führenden Heizgaszug mit Wärmetauscherflächen, welche heizgasseitig mit Oberflächen vergrößernden Elementen, insbesondere in Form von Rippen (6), versehen sind, seitlich begrenzen und dass die Heizmedium führenden Kanäle in den Gliedern jeweils in der Mitte eines Gliedes einen geringeren Querschnitt und eine höhere Strömungsgeschwindigkeit aufweisen als in den Randbereichen.

Vorteilhafte Weiterbildungen sind den Unteransprüchen zu entnehmen.

Dabei weisen die mit Heizgas beaufschlagten Wärmetauscherflächen zweier benachbarter Glieder über deren Länge in der Mitte, also an der Stelle mit der größten Wärmebelastung, einen größeren Abstand zueinander auf und bilden damit einen breiteren Heizgaszug als in den Randbereichen aus. Dabei besitzen die einander zugeordneten Rippen zweier Glieder in der Mitte jeweils eine größere Höhe und überlappen einander über eine größere Fläche als in den Randbereichen.
Der Querschnitt der Heizmedium führenden Kanäle in den Gliedern verjüngt sich jeweils zur Mitte eines Gliedes hin, läuft zum Beispiel konisch zu. Diese Querschnittsverringerung entspricht im Wesentlichen der Formschräge der für die gießtechnische Herstellung erforderlichen Kerne, wobei vorzugsweise ein Winkel von 1,5 Grad bis 7 Grad zur Mittelachse eines Kanals als Formschräge vorgesehen ist.
Die Heizmedium führenden Kanäle sind mit den Deckeln so miteinander verbunden, dass sich durch den gesamten Block, ausgehend von einem unteren Rücklaufanschluss, eine Durchströmung von unten nach oben zu einem dort angebrachten Vorlaufanschluss, im Gegenstrom zu den Heizgasen, einstellt. Dabei werden vom Heizmedium die verbundenen Kanäle in mehreren Ebenen nacheinander durchströmt.

In einer ersten Ausführungsform sind die Heizmedium führenden Kanäle mit den Deckeln so miteinander verbunden, dass sich ausgehend von einem Rücklaufanschluss nachfolgende Durchströmung einstellt: zunächst aus einer ersten unteren Ebene über den unteren Bereich des ersten äußeren Gliedes, mit einer Überleitung in mindestens ein Mittelglied und mit einer Durchströmung desselben im unteren Bereich, mit einer Überleitung in das zweite äußere Glied sowie einer Durchströmung in dessen unterem Bereich. Es folgt dann eine U-förmige vertikale Umlenkung im Glied auf eine zweite Ebene in den mittleren Bereich, von dieser aus zunächst eine Überleitung in mindestens ein Mittelglied und eine Durchströmung desselben im mittleren Bereich, eine Überleitung in den mittleren Bereich des ersten äußeren Gliedes und dort eine vertikale Umlenkung im Glied in eine dritte Ebene im mittleren Bereich. Auf dieser Ebene wird die Strömung umgekehrt zur zweiten Ebene durch den gesamten Block bis in das zweite äußere Glied geführt. Von dort ausgehend erfolgt eine U-förmige vertikale Umlenkung im Glied in eine vierte Ebene im oberen Bereich, auf der ein direkter Verbindungskanal durch einen stirnseitigen Deckel zum gegenüberliegenden ersten Glied sowie einem Vorlaufanschluss auf der oberen Ebene besteht.

Der Verbindungskanal umfasst und kühlt somit den Feuerraum an drei Seiten, so dass kein Isoliermaterial erforderlich ist. An der vierten, ungekühlten Seite befindet sich die Zugangsmöglichkeit zum Feuerraum, beispielsweise in Form einer Aussparung zum Anbringen eines Schauglases sowie von Zünd- und/oder Überwachungseinrichtungen für einen Brenner.
Auf der vierten Ebene ist das mindestens eine Mittelglied ausgespart, hat also einen Kühlkanal weniger als die beiden äußeren Glieder, um einen etwas tieferen Feuerraum auszubilden bzw. die nötige Ausbrandhöhe zu gewährleisten.
In einer zweiten Ausführungsform sind die Heizmedium führenden Kanäle mit den Deckeln so miteinander verbunden, dass sich ausgehend von einem Rücklaufanschluss eine serpentinenartige Durchströmung im ersten äußeren Glied, eine Überleitung und ebenfalls serpentinenartige Durchströmung in mindestens einem Mittelglied sowie eine Überleitung und eine serpentinenartige Durchströmung im zweiten äußeren Glied mit Verbindung zu einem Vorlaufanschluss einstellt.
Generell sind in den Deckeln Umlenkzonen vorgesehen, welche aus Auswölbungen der die Umlenkzonen begrenzenden Wände bestehen. Die Heizmedium führenden Kanäle besitzen in den Umlenkzonen einen mindestens gleich großen oder größeren Querschnitt als in den Randbereichen der Glieder, um für eine beruhigte, druckverlustarme Strömungsumlenkung zu sorgen. Einer der Deckel weist im oberen Bereich vorzugsweise keine Heizmedium führenden Kanäle auf, sondern besitzt stattdessen eine Aussparung zum Anbringen eines Schauglases sowie von Zünd- und/oder Überwachungseinrichtungen für einen Brenner. Um alle Komponenten zu einem Block heizgas- und flüssigkeitsdicht zu verbinden, sind die Stirnseiten der Glieder flanschartig ausgebildet und bilden eine Anlage- bzw. Dichtfläche für einen zugeordneten Deckel aus. Vorteilhafterweise werden die Deckel mit den Gliedern über ein Reibschweißverfahren verbunden, aber auch andere Schweißverbindungsverfahren mit Eignung für Aluminium-Werkstoffe sind dafür denkbar. Deckel mit den Glieder können auch an ihren beiden äußeren Rändern an mehreren Punkten mit den beiden äußeren Gliedern verschraubt sein.
Weiterhin können die Oberflächen vergrößernden Elemente im Heizgaszug, insbesondere in Form von in vertikaler Richtung verlaufenden Rippen, horizontal unterbrochen sein. Diese Unterbrechung soll Wärmeleitung vom heißen, oberen in den kühleren, unteren Wärmetauscherflächen-Bereich vermeiden, zum Beispiel um optimal die Heizgase unter den Taupunkt abzukühlen und den Brennwert zu nutzen. Die Unterbrechung einer Rippe erfolgt jeweils mindestens im Bereich zwischen der ersten und der zweiten Ebene der Heizmedium führenden Kanäle, weiche zueinander schon einen deutlichen Temperaturunterschied aufweisen. Außerdem kann ein Entlüftungsstutzen, eine Gas-/Luft-Gemischzufuhrleitung und/oder eine Abgasleitung in einem Glied oder einem Deckel integriert sein.
Mit der Erfindung wird ein kompakter, leichter und insbesondere für den Brennwertbetrieb geeigneter Wärmetauscher für ein Heizgerät geschaffen, welcher vorrangig aus Aluminium-Gusswerkstoffen gefertigt ist. Ein modularer Aufbau zur Darstellung unterschiedlicher Leistungsgrößen ist leicht möglich und die Fertigung der Kesselglieder ist relativ günstig. Der Wärmetauscher ist einfach zu reinigen und von der Oberseite her, über den relativ großen Feuerraum zugänglich. Die Aluminium-Teile können mit gut ausformbaren Kernen im Sandguss- und Spritz-/Druckgussverfahren oder im Verlorenen-Formen-Gussverfahren in Massenproduktion hergestellt werden.
Dieses erfindungsgemäße Design hat den Vorteil, dass der Wärmeübertragungskoeffizient im Zentrum des Wärmeaustauschers am höchsten ist. Durch die sich verjüngenden Wasserkanäle ist die Geschwindigkeit des Heizmediums am Anfang und am Ende jedes Kanals relativ niedrig. Sie ist nur im Zentrum hoch, wo eine hohe Wärmeübertragungsleistung erforderlich ist. Daher können die Heizmedium führenden Kanäle im Zentrum schmäler werden und die Höhe der Rippen entsprechend zunehmen, weil der hohe Wärmeeintrag im Zentrum leicht wegen der lokal höheren Geschwindigkeit an das Heizmedium übergeben werden kann. Das sonst übliche Problem mit der Gefahr des Kochens an dieser kritischen Stelle wird vermieden.
Die Effizienz des Wärmeaustauschers wird besonders heizgasseitig erhöht, weil die Rippen ineinander verschachtelt sind und damit ein große spezifische Wärmetauscher-Fläche bieten. Weiterhin herrschen bei der erfindungsgemäßen Konstruktion relativ niedrige Temperaturen in den vom Heizmedium umspülten Dichtungszonen vor, welche den Gebrauch von gängigen Dichtungsmaterialien ermöglichen.

Die Zeichnung stellt ein Ausführungsbeispiel der Erfindung dar. Es zeigt einen Wärmetauscher:
Fig. 1: in einer perspektivischen Ansicht,

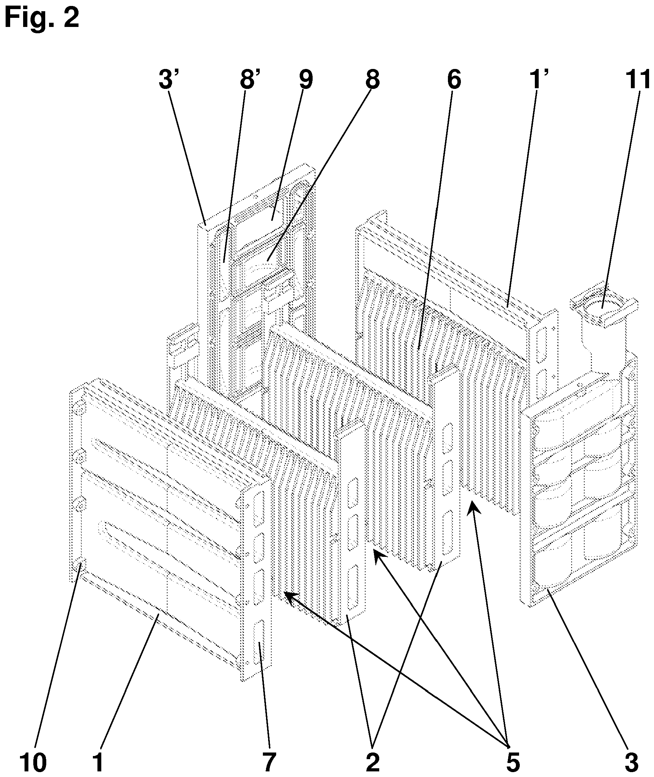

Fig. 2: in einer perspektivischen Explosionsdarstellung,
Fig. 3: in einem horizontalen Längsschnitt und
Fig. 4: in einem vertikalen Längsschnitt.

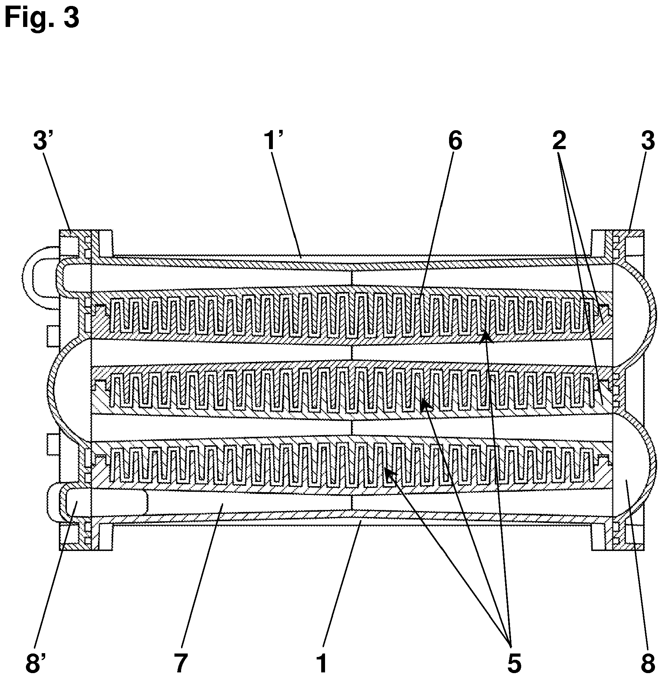

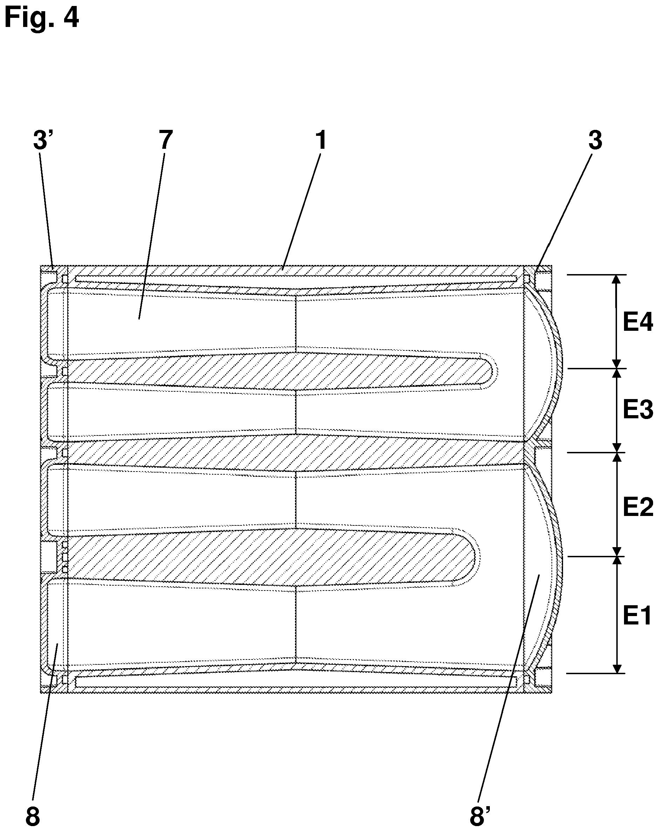

Der Wärmetauscher besteht im Wesentlichen aus zwei vertikal ausgerichteten äußeren Gliedern 1, 1', zwei zwischen diesen positionierten Mittelgliedern 2 sowie jeweils einem Deckel 3, 3' an den Stirnseiten. Damit wird ein Feuerraum 4 im oberen Bereich ausgebildet, von dem aus Heizgaszüge 5 mit Rippen 6 versehene Wärmetauscherflächen zu einem nicht dargestellten Abgassammler im unteren Bereich führen.
In alle Glieder 1, 1', 2 und Deckel 3, 3' sind Heizmedium führende Kanäle 7 integriert, so dass über die Deckel 3, 3' an der Stirnseite alle Glieder 1, 1', 2 miteinander zu einem heizgasdichten und in Bezug auf die Heizmedium führenden Kanäle 7 mindestens teilweise verbundenen Block montiert sind.
Besonders aus Fig. 3 geht hervor, wie die Wärmetauscherflächen zweier benachbarter Glieder 1, 1', 2 über deren Länge in der Mitte einen größeren Abstand zueinander aufweisen und damit einen breiteren Heizgaszug 5 als in den Randbereichen ausbilden. In Fig. 3 und Fig. 4 ist weiterhin zu erkennen, dass sich der Querschnitt der Heizmedium führenden Kanäle 7 in den Gliedern 1, 1', 2 jeweils zur Mitte eines Gliedes 1, 1', 2 hin konisch verkleinert, um dort eine höhere Strömungsgeschwindigkeit als in den Randbereichen zu erreichen.

Die Heizmedium führenden Kanäle 7 mit den Deckeln 3, 3' sind so miteinander verbunden, dass sich durch den gesamten Block, ausgehend von einem unteren Rücklaufanschluss, eine Durchströmung von unten nach oben zu einem dort angebrachten Vorlaufanschluss im Gegenstrom zu den Heizgasen einstellt. Dabei werden die Heizmedium führenden Kanäle 7 in mehreren Ebenen E1, E2, E3, E4 nacheinander durchströmt. Jeweils innerhalb einer Ebene E1, E2, E3, E4 schlängelt sich die Strömung durch die Bauteile der Anordnung, mit horizontaler Umlenkung in den in den Umlenkzonen 8 der Deckel 3, 3'. Am Ende des Strömungsweges in einer Ebene E1, E2, E3 erfolgt wechselweise innerhalb der beiden äußeren Glieder 1, 1' eine U-förmige vertikale Umlenkung 8' auf die nächste, darüber liegenden Ebene E2, E3, E4.
Der Deckel 3' besitzt im oberen Bereich keine Heizmedium führenden Kanäle 7, sondern stattdessen eine Aussparung 9 zum Anbringen eines Schauglases sowie von Zünd- und/oder Überwachungseinrichtungen für einen Brenner. Die Stirnseiten aller Glieder 1, 1', 2 sind flanschartig ausgebildet und bilden eine Anlage- bzw. Dichtfläche für einen zugeordneten Deckel 3, 3' aus, wobei die Deckel 3, 3' entweder mit einem Schweißverfahren verbunden oder an ihren beiden äußeren Rändern an mehreren Punkten 10 mit den beiden äußeren Gliedern 1,1' verschraubt sind.

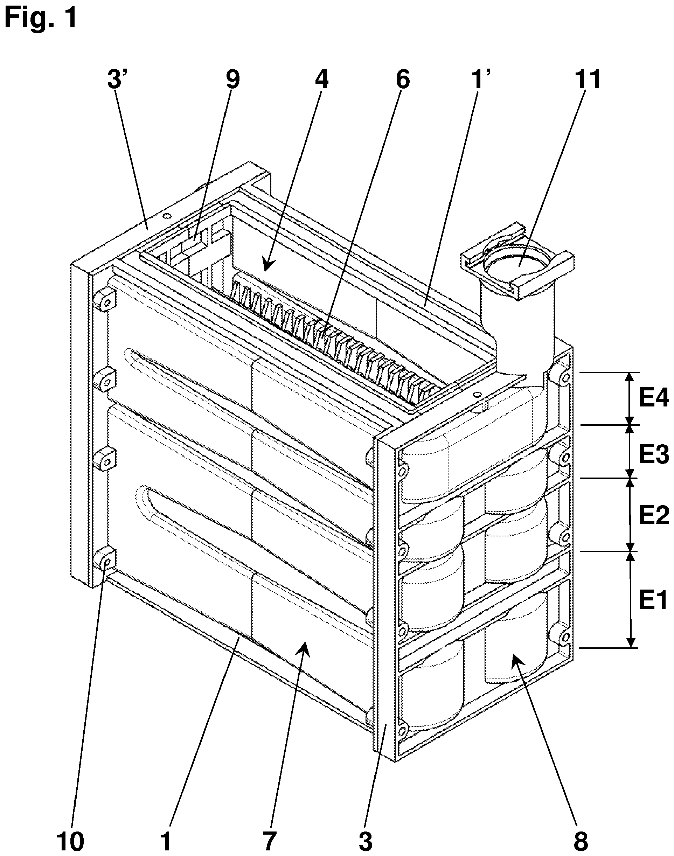

In Fig. 1 ist weiterhin ein Entlüftungsstutzen 11 dargestellt, welcher in den Deckel 3 integriert ist.

## Patentansprüche

1. Wärmetauscher für ein Heizgerät, insbesondere ein Brennwertheizgerät, bestehend aus mindestens zwei vertikal ausgerichteten Gliedern (1, 1', 2) und jeweils einem Deckel (3, 3') an der Stirnseite, welche einen Feuerraum (4) ausbilden, und mit wahlweise mindestens einem Mittelglied (2) zwischen den beiden begrenzende äußeren Gliedern (1, 1'), sowie mit mehreren parallel und/oder in Reihe durchströmten, Heizmedium führenden Kanälen (7) in den Gliedern (1, 1', 2) und Deckeln (3, 3'),
wobei Glieder (1, 1', 2) und Deckel (3, 3') an der Stirnseite miteinander zu einem heizgasdichten Block verbundenen sind, dessen Heizmedium führende Kanäle (7) miteinander korrespondieren, **dadurch gekennzeichnet, dass** die Deckel mindestens einen vom Feuerraum (4) im oberen Bereich zu einem Abgassammler im unteren Bereich abwärts führenden Heizgaszug (5) mit Wärmetauscherflächen, welche heizgasseitig mit Oberflächen vergrößernden Elementen, insbesondere in Form von Rippen (6), versehen sind, seitlich begrenzenund dass die Heizmedium führenden Kanäle (7) in den Gliedern (1, 1', 2) jeweils in der Mitte eines Gliedes (1, 1', 2) einen geringeren Querschnitt und eine höhere Strömungsgeschwindigkeit aufweisen als in den Randbereichen.

2. Wärmetauscher nach Anspruch 1,
**dadurch gekennzeichnet, dass** die mit Heizgas beaufschlagten Wärmetauscherflächen zweier benachbarter Glieder (1, 1', 2) über deren Länge in der Mitte einen größeren Abstand zueinander aufweisen und damit einen breiteren Heizgaszug (5) als in den Randbereichen ausbilden, wobei Rippen (6) in der Mitte jeweils eine größere Höhe besitzen und einander über eine größere Fläche überlappen als in den Randbereichen.

3. Wärmetauscher nach einem der Ansprüche 1 oder 2,
**dadurch gekennzeichnet, dass** sich der Querschnitt der Heizmedium führenden Kanäle (7) in den Gliedern (1, 1', 2) jeweils zur Mitte eines Gliedes (1, 1', 2) hin verjüngt.

4. Wärmetauscher nach einem der Ansprüche 1 bis 3,
**dadurch gekennzeichnet, dass** der sich zur Mitte eines Gliedes (1, 1', 2) hin verkleinernde Querschnitt der Heizmedium führenden Kanäle (7) im Wesentlichen der Formschräge der für die gießtechnische Herstellung erforderlichen Kerne entspricht, wobei vorzugsweise ein Winkel von 1,5 Grad bis 7 Grad zur Mittelachse eines Kanals (7) vorgesehen ist.

5. Wärmetauscher nach einem der Ansprüche 1 bis 4,
**dadurch gekennzeichnet, dass** die Heizmedium führenden Kanäle (7) mit den Deckeln (3, 3') so miteinander verbunden sind, dass sich durch den gesamten Block, ausgehend von einem unteren Rücklaufanschluss, eine Durchströmung von unten nach oben zu einem dort angebrachten Vorlaufanschluss im Gegenstrom zu den Heizgasen einstellt, und dass die Heizmedium führenden Kanäle (7) so miteinender verbunden sind, dass mehrere Ebenen (E1, E2, E3, E4) nacheinander durchströmt werden.

6. Wärmetauscher nach einem der Ansprüche 1 bis 5,
**dadurch gekennzeichnet, dass** die Heizmedium führenden Kanäle (7) mit den Deckeln (3, 3') so miteinander verbunden sind, dass sich ausgehend von einem Rücklaufanschluss eine Durchströmung einstellt, welche zunächst aus einer ersten unteren Ebene (E1) über den unteren Bereich des ersten äußeren Gliedes (1), eine Überleitung in mindestens ein Mittelglied (2) und eine Durchströmung desselben im unteren Bereich, eine Überleitung in das zweite äußere Glied (1') und eine Durchströmung in dessen unterem Bereich besteht, und dass dort eine U-förmige vertikale Umlenkung (8') im Glied (1') auf eine zweite Ebene (E2) in den mittleren Bereich erfolgt, von der aus zunächst eine Überleitung in mindestens ein Mittelglied (2) und eine Durchströmung desselben im mittleren Bereich, eine Überleitung in den mittleren Bereich des ersten äußeren Gliedes (1) und dort eine vertikale Umlenkung (8') im Glied (1) in eine dritte Ebene (E3) im mittleren Bereich erfolgt, wobei auf dieser Ebene (E3) die Strömung umgekehrt zur zweiten Ebene (E2) durch den gesamten Block bis in das zweite äußere Glied (1') geführt wird, und dass von dort ausgehend eine U-förmige vertikale Umlenkung (8') im Glied (1') in eine vierte Ebene (E4) im oberen Bereich erfolgt, auf der ein direkter Verbindungskanal durch einen stirnseitigen Deckel (3) zum gegenüberliegenden ersten Glied (1) und einem Vorlaufanschluss auf der oberen Ebene (E4) besteht.

7. Wärmetauscher nach einem der Ansprüche 1 bis 4,
**dadurch gekennzeichnet, dass** die Heizmedium führenden Kanäle (7) mit den Deckeln (3,3') so miteinander verbunden sind, dass sich ausgehend von einem Rücklaufanschluss eine serpentinenartige Durchströmung im ersten äußeren Glied (1), eine Überleitung und ebenfalls serpentinenartige Durchströmung in mindestens einem Mittelglied (2) sowie eine Überleitung und eine serpentinenartige Durchströmung im zweiten äußeren Glied (1') mit Verbindung zu einem Vorlaufanschluss einstellt.

8. Wärmetauscher nach einem der Ansprüche 1 bis 7,
**dadurch gekennzeichnet, dass** in den Deckeln (3, 3') horizontale und vertikale Umlenkzonen (8, 8') vorgesehen sind, welche aus Auswölbungen der die Umlenkzonen (8, 8') begrenzenden Wände bestehen.

9. Wärmetauscher nach einem der Ansprüche 1 bis 8,
**dadurch gekennzeichnet, dass** die Heizmedium führenden Kanäle (7) in den Umlenkzonen (8, 8') einen mindestens gleich großen oder größeren Querschnitt besitzen als in den Randbereichen der Glieder (1, 1', 2).

10. Wärmetauscher nach einem der Ansprüche 1 bis 9,
**dadurch gekennzeichnet, dass** ein Deckel (3') im oberen Bereich keine Heizmedium führenden Kanäle (7) aufweist, sondern stattdessen eine Aussparung (9) zum Anbringen eines Schauglases sowie von Zünd- und/oder Überwachungseinrichtungen für einen Brenner besitzt.

11. Wärmetauscher nach einem der Ansprüche 1 bis 10,
**dadurch gekennzeichnet, dass** die Stirnseiten der Glieder (1, 1', 2) flanschartig ausgebildet sind und eine Anlage- bzw. Dichtfläche für einen zugeordneten Deckel (3, 3') ausbilden, wobei die Deckel (3, 3') an ihren beiden äußeren Rändern an mehreren Punkten (10) mit den beiden äußeren Gliedern (1, 1') verbunden sind.

12. Wärmetauscher nach einem der Ansprüche 1 bis 11,
**dadurch gekennzeichnet, dass** die Oberflächen vergrößernden Elemente im Heizgaszug (5), insbesondere in Form von in vertikaler Richtung verlaufenden Rippen (6), jeweils mindestens im Bereich zwischen der ersten und der zweiten Ebene (E1, E2) der Heizmedium führenden Kanäle (7) horizontal unterbrochen sind.

13. Wärmetauscher nach einem der Ansprüche 1 bis 12,
**dadurch gekennzeichnet, dass** ein Entlüftungsstutzen (11), eine Gas-/Luft-Gemischzufuhrleitung und/oder eine Abgasleitung in einem Glied (1, 1') oder einem Deckel (3, 3') integriert ist.

## Claims

1. Heat exchanger for a heater, in particular a condensing heater, comprising at least two vertically oriented members (1, 1', 2) and one cover (3, 3') on each end side, which form a combustion chamber (4), and with optionally at least one central member (2) between the two bounding outer members (1, 1'), and also with a plurality of heating medium-channelling ducts (7) in the members (1, 1', 2) and covers (3, 3'), through which ducts the flow passes in parallel and/or in series,
wherein the members (1, 1', 2) and covers (3, 3') are connected to one another on the end side to form a heating gas-tight block whose heating medium-channelling ducts (7) correspond to one another, **characterized in that** the covers laterally bound at least one heating gas flue (5) which is routed downwardly from the combustion chamber (4) in the upper region to an exhaust-gas manifold in the lower region and which has heat exchanger surfaces which are provided on the heating gas side with surface-increasing elements, in particular in the form of ribs (6), and **in that** the heating medium-channelling ducts (7) in the members (1, 1', 2) each have, in the centre of a member (1, 1', 2), a smaller cross section and a higher flow velocity than in the edge regions.

2. Heat exchanger according to Claim 1,
**characterized in that** the heat exchanger surfaces, which are acted upon by heating gas, of two adjacent members (1, 1', 2) have, over their length, a larger distance from one another in the centre and thus form a wider heating gas flue (5) than in the edge regions, wherein ribs (6) in the centre each have a greater height and overlap one another over a larger area than in the edge regions.

3. Heat exchanger according to either of Claims 1 and 2,
**characterized in that** the cross section of the heating medium-channelling ducts (7) in the members (1, 1', 2) in each case tapers towards the centre of a member (1, 1', 2).

4. Heat exchanger according to one of Claims 1 to 3,
**characterized in that** the cross section of the heating medium-channelling ducts (7) that decreases towards the centre of a member (1, 1', 2) corresponds substantially to the draft of the cores required for the production by casting, wherein, preferably, an angle of 1.5 degrees to 7 degrees to the centre axis of a duct (7) is provided.

5. Heat exchanger according to one of Claims 1 to 4,
**characterized in that** the heating medium-channelling ducts (7) are connected to the covers (3, 3') in such a way that there is established, through the entire block starting from a lower return connection, a throughflow from bottom to top to a flow connection mounted there, in counter-flow to the heating gases, and **in that** the heating medium-channelling ducts (7) are connected to one another in such a way that the flow passes through a plurality of planes (E1, E2, E3, E4) in succession.

6. Heat exchanger according to one of Claims 1 to 5,
**characterized in that** the heating medium-channelling ducts (7) are connected to the covers (3, 3') in such a way that there is established, starting from a return connection, a throughflow which, at first from a first lower plane (E1) via the lower region of the first outer member (1), is a transfer into at least one central member (2) and a flow therethrough in the lower region, a transfer into the second outer member (1') and a through flow in its lower region, and that there occurs there a U-shaped vertical deflection (8') in the member (1') to a second plane (E2) in the central region, from which there occurs at first a transfer into at least one central member (2) and a flow therethrough in the central region, a transfer into the central region of the first outer member (1) and there a vertical deflection (8') in the member (1) into a third plane (E3) in the central region, wherein, on this plane (E3), the flow is channelled conversely to the second plane (E2) through the entire block into the second outer member (1'), and **in that**, starting from there, there occurs a U-shaped vertical deflection (8') in the member (1') into a fourth plane (E4) in the upper region, on which there is a direct connecting duct through an end-side cover (3) to the opposite first member (1) and a flow connection on the upper plane (E4).

7. Heat exchanger according to one of Claims 1 to 4,
**characterized in that** the heating medium-channelling ducts (7) are connected to the covers (3, 3') in such a way that, starting from a return connection, there is established a serpentine-like throughflow in the first outer member (1), a transfer and likewise a serpentine-like throughflow in at least one central member (2) and also a transfer and a serpentine-like throughflow in the second outer member (1') with connection to a flow connection.

8. Heat exchanger according to one of Claims 1 to 7,
**characterized in that** horizontal and vertical deflection zones (8, 8') are provided in the covers (3, 3') and consist of arcuate projections of the walls bounding the deflection zones (8, 8').

9. Heat exchanger according to one of Claims 1 to 8,
**characterized in that** the heating medium-channelling ducts (7) in the deflection zones (8, 8') have a cross section which is at least equal to or larger than in the edge regions of the members (1, 1', 2).

10. Heat exchanger according to one of Claims 1 to 9,
**characterized in that** a cover (3') has no heating medium-channelling ducts (7) in the upper region, but instead has a cutout (9) for mounting an inspection glass and ignition and/or monitoring devices for a burner.

11. Heat exchanger according to one of Claims 1 to 10,
**characterized in that** the end sides of the members (1, 1', 2) are of flange-like design and form a bearing or sealing surface for an associated cover (3, 3'), wherein the covers (3, 3') are connected at their two outer edges to the two outer members (1, 1') at a plurality of points (10).

12. Heat exchanger according to one of Claims 1 to 11,
**characterized in that** the surface-increasing elements in the heating gas flue (5), in particular in the form of ribs (6) extending in the vertical direction, are each horizontally interrupted at least in the region between the first and the second plane (E1, E2) of the heating medium-channelling ducts (7).

13. Heat exchanger according to one of Claims 1 to 12,
**characterized in that** a venting nozzle (11), a gas/air mixture supply line and/or an exhaust-gas line is integrated in a member (1, 1') or a cover (3, 3').

## Revendications

1. Echangeur de chaleur pour un appareil de chauffage, en particulier un appareil de chauffage à condensation, se composant d'au moins deux éléments orientés verticalement (1, 1', 2) et chaque fois d'un couvercle (3, 3') sur le côté frontal, qui forment un foyer (4), et avec au choix au moins un élément moyen (2) entre les deux éléments extérieurs de limitation (1, 1'), ainsi qu'avec plusieurs canaux (7) conduisant un fluide de chauffage et parcourus en parallèle et/ou en série dans les éléments (1, 1', 2) et les couvercles (3, 3'), dans lequel des éléments (1, 1', 2) et des couvercles (3, 3') sont assemblés les uns aux autres sur le côté frontal en un bloc étanche au gaz de chauffage, dont les canaux (7) conduisant un fluide de chauffage correspondent les uns avec les autres, **caractérisé en ce que** les couvercles limitent latéralement au moins un carneau à gaz de chauffage (5) conduisant vers le bas depuis le foyer (4) dans la région supérieure jusqu'à un collecteur de gaz brûlés dans la région inférieure avec des faces d'échangeur de chaleur, qui sont munies sur le côté exposé au gaz de chauffage d'éléments d'agrandissement des surfaces, en particulier sous forme de nervures (6), et **en ce que** les canaux (7) conduisant un fluide de chauffage dans les éléments (1, 1', 2) présentent respectivement dans le milieu d'un élément (1, 1', 2) une section transversale plus petite et une vitesse d'écoulement plus élevée que dans les régions de bord.

2. Echangeur de chaleur selon la revendication 1, **caractérisé en ce que** les faces d'échangeur de chaleur exposées au gaz de chauffage de deux éléments voisins (1, 1', 2) présentent sur leur longueur en leur milieu une plus grande distance l'une de l'autre et forment dès lors un carneau à gaz de chauffage (5) plus large que dans les régions de bord, dans lequel des nervures (6) possèdent respectivement au milieu une plus grande hauteur et se recouvrent mutuellement sur une plus grande surface que dans les régions de bord.

3. Echangeur de chaleur selon une des revendications 1 ou 2, **caractérisé en ce que** la section transversale des canaux (7) conduisant un fluide de chauffage dans les éléments (1, 1', 2) diminue chaque fois en direction du milieu d'un élément (1, 1', 2).

4. Echangeur de chaleur selon l'une quelconque des revendications 1 à 3, **caractérisé en ce que** la section transversale des canaux (7) conduisant un fluide de chauffage, qui diminue en direction du milieu d'un élément (1, 1', 2), correspond essentiellement à la dépouille des noyaux nécessaires pour la fabrication par la technique de coulée, dans lequel il est prévu de préférence un angle de 1,5 degrés à 7 degrés par rapport à l'axe central d'un canal (7).

5. Echangeur de chaleur selon l'une quelconque des revendications 1 à 4, **caractérisé en ce que** les canaux (7) conduisant un fluide de chauffage sont reliés les uns aux autres avec les couvercles (3, 3') de telle manière qu'il s'établisse à travers tout le bloc, à partir d'un raccord de retour inférieur, un écoulement de bas en haut jusqu'à un raccord d'entrée installé ici, à contre-courant avec les gaz de chauffage, et **en ce que** les canaux (7) conduisant un fluide de chauffage sont reliés les uns aux autres, de telle manière que plusieurs plans (E1, E2, E3, E4) soient parcourus l'un après l'autre.

6. Echangeur de chaleur selon l'une quelconque des revendications 1 à 5, **caractérisé en ce que** les canaux (7) conduisant un fluide de chauffage sont reliés les uns aux autres avec les couvercles (3, 3'), de telle manière qu'il s'établisse à partir d'un raccord de retour un écoulement, qui d'abord d'un premier plan inférieur (E1) par la région inférieure du premier élément extérieur (1), est un transfert dans au moins un élément moyen (2) et un écoulement dans celui-ci dans la région inférieure, un transfert dans le deuxième élément extérieur (1') et un écoulement dans la région inférieure de celui-ci, et qu'il se produise à cet endroit une déviation verticale en forme de U (8') dans l'élément (1') sur un deuxième plan (E2) dans la région moyenne, à partir duquel il se produit d'abord un transfert dans au moins un élément moyen (2) et un écoulement dans celui-ci dans la région moyenne, un transfert dans la région moyenne du premier élément extérieur (1) et ici une déviation verticale (8') dans l'élément (1) dans un troisième plan (E3) dans la région moyenne, dans lequel l'écoulement est conduit en sens inverse sur ce plan (E3) vers le deuxième plan (E2) à travers tout le bloc jusque dans le deuxième élément extérieur (1'), et **en ce qu'**à partir de là il se produise une déviation verticale en forme de U (8') dans l'élément (1') dans un quatrième plan (E4) dans la région supérieure, sur lequel il existe un canal de liaison direct à travers un couvercle frontal (3) vers le premier élément opposé (1) et un raccord d'entrée sur le plan supérieur (E4).

7. Echangeur de chaleur selon l'une quelconque des revendications 1 à 4, **caractérisé en ce que** les canaux (7) conduisant un fluide de chauffage sont reliés les uns aux autres avec les couvercles (3, 3') de telle manière qu'il s'établisse à partir d'un raccord de retour un écoulement sinueux dans le premier élément extérieur (1), un transfert et également un écoulement sinueux dans au moins un élément moyen (2) ainsi qu'un transfert et un écoulement sinueux dans le deuxième élément extérieur (1') avec raccordement vers un raccord d'entrée.

8. Echangeur de chaleur selon l'une quelconque des revendications 1 à 7, **caractérisé en ce qu'**il est prévu dans les couvercles (3, 3') des zones de déviation horizontales et verticales (8, 8'), qui se composent de courbures des parois délimitant les zones de déviation (8, 8').

9. Echangeur de chaleur selon l'une quelconque des revendications 1 à 8, **caractérisé en ce que** les canaux (7) conduisant un fluide de chauffage présentent dans les zones de déviation (8, 8') une section transversale au moins aussi grande ou plus grande que dans les régions de bord des éléments (1, 1', 2).

10. Echangeur de chaleur selon l'une quelconque des revendications 1 à 9, **caractérisé en ce qu'**un couvercle (3') ne présente dans la région supérieure pas de canaux (7) conduisant un fluide de chauffage, mais au lieu de ceux-ci une découpe (9) pour la pose d'un hublot ainsi que de dispositifs d'allumage et/ou de surveillance pour un brûleur.

11. Echangeur de chaleur selon l'une quelconque des revendications 1 à 10, **caractérisé en ce que** les côtés frontaux des éléments (1, 1', 2) sont réalisés à la manière de brides et forment une face d'appui ou d'étanchéité pour un couvercle associé (3, 3'), dans lequel les couvercles (3, 3') sont assemblés sur leurs deux bords extérieurs en plusieurs points (10) aux deux éléments extérieurs (1, 1').

12. Echangeur de chaleur selon l'une quelconque des revendications 1 à 11, **caractérisé en ce que** les éléments d'agrandissement de surfaces dans le carneau à gaz de chauffage (5), en particulier sous forme de nervures (6) s'étendant en direction verticale, sont interrompus horizontalement chaque fois au moins dans la région située entre le premier et le deuxième plans (E1, E2) des canaux (7) conduisant un fluide de chauffage.

13. Echangeur de chaleur selon l'une quelconque des revendications 1 à 12, **caractérisé en ce qu'**un tuyau d'évacuation d'air (11), une conduite d'arrivée du mélange gaz/air et/ou une conduite d'évacuation des gaz brûlés sont intégrés dans un élément (1, 1') ou dans un couvercle (3, 3').
